# EUROPEAN PATENT APPLICATION

(11) **EP 4 813 234 A1**
(43) Date of publication of application: **30.09.2026**
(21) Application number: 25166814.1
(22) Date of filing: 27.03.2025
(51) Int. Cl.: A24F 40/51, G01F 1/698, A24F 40/57

(54) **ELECTRICAL CIRCUITRY FOR AN AEROSOL-GENERATING SYSTEM**

(71) Applicant: Imperial Tobacco Limited, Bristol BS3 2LL (GB)
(72) Inventor: HYLA, Jan, Bristol, BS3 2LL (GB); WALLACE, Andrew Robert, Bristol, BS3 2LL (GB); CANNELL, Graham, Bristol, BS3 2LL (GB)
(74) Representative: Mewburn Ellis LLP

(57) **Abstract**

A method of monitoring user puff activity of an aerosol-generating system (1, 100) comprising a heating element (2a, 102a) for generating an aerosol from an aerosol-forming material is described. The method includes controlling a power operation of the heating element at regular time intervals for maintaining a target temperature by switching a power supply from the power source (4, 104) to the heating element (2a, 102a) between a high power and a low power, calculating a first value indicative of the power operation over a first consecutive set of the time intervals, and a second value indicative of the power operation over a second consecutive set of the time intervals starting after the first consecutive set, and determining that a puff has either started or ended if an absolute difference between the first value and the second value is greater than a predetermined threshold.

## Description

### FIELD

The present disclosure relates to electrical circuitry for monitoring puff activity of an aerosol-generating system. The electrical circuitry is configured to be connected to a heating element of the system and to a power source for powering the heating element. The present disclosure further relates to an aerosol-generating system which includes the electrical circuitry. The present disclosure also relates to a method of monitoring puff activity of an aerosol-generating system.

### BACKGROUND

Aerosol-generating systems include electronic systems that permit a user to simulate the act of smoking by producing an aerosol (also referred to as a "vapour') that is drawn into the lungs through the mouth (inhaled) and then exhaled. The inhaled aerosol typically bears nicotine and/or flavourings without, or with fewer of, the odour and health risks associated with traditional smoking.

An electronic vapour product (EVP), also known as a vaping apparatus or a vape, is a type of aerosol-generating system in which an aerosol-forming material (e.g. a liquid or gel) is aerosolised by an aerosol-generating unit, such as a heating element or ultrasonic elements.

A heat-not-burn (HNB) device, also known as a heated tobacco device, is a type of aerosol-generating system in which an aerosol-forming material (e.g., a solid precursor such as tobacco) is heated by a heating system to produce an aerosol that can be inhaled by the user.

There is an increasing demand for aerosol-generating systems which provide a more bespoke user experience. For example, the operation of an aerosol-generating system can be managed based on the inhalation activity of a user which is monitored using airflow sensors.

It is against this background that the present invention has been developed.

### SUMMARY

At its most general, the present invention relates to a system and/or a method of determining a puff of an aerosol-generating system based on a power operation of a heating element of the system. Also in a general sense, the present invention relates to a system and/or a method of determining that a puff of an aerosol-generating system has either started or ended based on a power operation of the heating element. Electrical circuitry, an aerosol-generating device, and/or an aerosol-generating system are configured to implement the system and/or method are also provided.

In a general aspect, the present disclosure provides a method of determining a puff of an aerosol-generating system comprising a heating element for generating an aerosol from an aerosol-forming material, wherein the method includes: controlling a power operation of the heating element at regular time intervals for maintaining a target temperature by switching a power supply from the power source to the heating element between a high power and a low power; calculating a first value indicative of the power operation over a first consecutive set of the time intervals, and a second value indicative of the power operation over a second consecutive set of the time intervals starting after the first consecutive set; and determining that a puff has either started or ended if an absolute difference between the first value and the second value is greater than a predetermined threshold.

It will be apparent that determining that the puff has either started or ended does not necessarily involve determining whether the puff has started or ended, i.e. it can be determined that a puff has either started or ended without knowing which of these events has occurred.

Advantageously, the present invention allows consecutive occurrences of a puff either starting or ending to be identified, from which the durations of puffs and the durations between consecutive puffs may be calculated. This would not be possible if only the start of each puff could be determined. Therefore, a user's puff activity can be monitored with greater accuracy and precision to allow a more bespoke operation of the aerosol-generating system for the user, as discussed in more detail below.

In a first aspect, the present disclosure provides an electrical circuitry for determining a puff of an aerosol-generating system. The system comprises a heating element for generating an aerosol from an aerosol-forming material. The electrical circuitry is connectable to the heating element and a power source for powering the heating element. The electrical circuitry is configured to control a power operation of the heating element at regular time intervals for maintaining a target temperature by switching a power supply from the power source to the heating element between a high power and a low power such that each interval is either: (i) a high-power interval in which mostly high power is supplied to the heating element, or (ii) a low-power interval in which mostly low power is supplied to the heating element. Optionally, the controller is further configured to calculate a first value indicative of the power operation over a first consecutive set of the time intervals, and a second value indicative of the power operation over a second consecutive set of the time intervals starting after the first consecutive set. Further optionally, the controller is configured to determine that a puff has started if a difference between the second value and the first value is greater than a predetermined first threshold and/or a puff has ended if a difference between the first value and the second value is greater than a predetermined second threshold.

In the present disclosure, the terms high power and low power are defined relative to each other (i.e. the high power refers to a power value that is greater than a power value of the low power). At the start of a puff, there may be an increased rate of heat transfer from the heating element (e.g. to the aerosol-forming material), causing a (significant) reduction in the temperature of the heating element. Responsive to this temperature change, the heating element may be operated at the high power immediately after the start of the puff, e.g. for maintaining the temperature of the heating element at a preset target temperature which may be required to generate the aerosol. This may be considered a thermostatic control of the heating element.

At the end of the puff, there may be a decreased rate of heat transfer from the heating element (e.g. to the aerosol-forming material), causing a (significant) increase in the temperature of the heating element being supplied with the high power. Responsive to this temperature change, the heating element may be operated at the low power immediately after the end of the puff (e.g. for maintaining the temperature of the heating element at a preset target temperature to avoid overheating the aerosol-forming material).

In this way, the puff activity can be determined from the power operation activity of the heating element. This avoids the need for airflow sensors to monitor puff activity, thereby providing a more cost-effective aerosol-generating system with fewer parts.

During a steady-state period of use (during a puff, before a puff, and/or after a puff), the power operation of the heating element may switch between supplying the high power and the low power more frequently to counteract relatively minor temperature fluctuations (e.g. cooling of the heating element). Such frequent changes of the power operation can be difficult to distinguish from changes in the power operation associated with the start or end of a puff and are therefore referred to as sampling noise in the present context. The present invention reduces the effect of sampling noise by monitoring changes in the power operation of the heating element averaged over consecutive time intervals. Therefore, the present invention may allow a more accurate and reliable determination of when a puff has started or ended.

The electrical circuitry may be configured to calculate the first value and the second value repeatedly over time to determine a rolling average. The first consecutive set of the time intervals and/or the second consecutive set of the time intervals may be preset and/or may not change over a puff session. Further, a time period (e.g. the number of regular intervals) between the start of the first consecutive set of the time intervals and the start of the second consecutive set of the time intervals may be preset and/or may not change over a puff session.

Controlling the power operation of the heating element may include periodically determining whether to switch the power supply to the heating element (e.g. between the high power and low power) or to continue supplying the same power to the heating element. The frequency of this periodic determination may be referred to as a control frequency, which may be the inverse of the duration of each time interval.

The power operation of the heating element during each interval may be representative of an overall amount of power supplied to the heating element during the respective time interval. The power operation of each time interval may be determined from a control signal (i.e. a thermostatic control signal) which is used to control the power supply to the heating element. The electrical circuitry may be configured to control the power operation of the heating element to supply substantially only the high power or substantially only the low power to the heating element during each time interval. This may mean that the controller does not switch between supplying high power and supplying low power during each time interval.

The low power may correspond to a zero-voltage applied across the heating element. The high power may correspond to a battery-voltage or a predetermined voltage (e.g. a voltage that does not change when the battery voltage decreases over time) applied across the heating element. In other words, the power operation of the heating element may be varied by switching the heating element ON and OFF. The electrical circuitry may be configured to use pulse-width modulation (PWM) to switch the voltage across the heating element ON and OFF. As such, the control frequency may correspond to a PWM switching frequency. The control signal may correspond to a PWM signal.

Each value indicative of the power operation over the respective consecutive set of time intervals may be indicative of an amount of high-power operation. For example, the amount of high-power operation may be a total number of time intervals in which mostly high power is supplied to the heating element (e.g. a total number of high-power intervals) in the respective set of consecutive time intervals.

Each value indicative of the power operation over the respective consecutive set of time intervals may be indicative of an amount of low-power operation. The amount of high-power operation may be inversely proportional to the amount of low-power operation, in which case the choice of whether each value is indicative of an amount of high-power or low-power operation may be arbitrary. Although examples relating to the indication of high-power operation are described hereinafter, the corresponding examples relating to the indication of low-power operation are also contemplated. For example, the amount of low-power operation may be a total number of time intervals in which mostly low power is supplied to the heating element (e.g. a total number of low-power intervals) in the respective set of consecutive time intervals.

Over an extended time period including a plurality of the time intervals, the amount of high-power operation will be substantially equal to the amount of low-power operation, regardless of variations in the power operation between consecutive intervals. This differs at the start of a puff when the amount of high-power operation is greater than the amount of low-power operation, and also at the end of a puff when the amount of low-power operation is greater than the amount of high-power operation, to maintain the temperature of the heating element in each case. By determining the difference between the first value and the second value and/or the difference between the second value and the first value and comparing the/each difference to a respective predetermined threshold, individual user puffs are able to be identified more accurately.

Where the first and second values are indicative of the total number of time intervals in which mostly high power is supplied to the heating element, one or more of the predetermined threshold, the predetermined first threshold, and/or the predetermined second threshold may be equal to: at least 2 high-power time intervals, e.g. at least 3 high-power time intervals, e.g. at least 4 high-power time intervals, e.g. at least 5 high-power time intervals.

Where the first and second values are indicative of the total number of time intervals in which mostly low power is supplied to the heating element, one or more of the predetermined threshold, the predetermined first threshold, and/or the predetermined second threshold may be equal to: at least 2 low-power time intervals, e.g. at least 3 low-power time intervals, e.g. at least 4 low-power time intervals, e.g. at least 5 low-power time intervals.

The temperature of the heating element may change at a different rate at the start of the puff as compared to the end of the puff. Therefore, the predetermined first and second thresholds may be different. For example, the predetermined second threshold may be greater than the predetermined first threshold. Alternatively, the predetermined first threshold may be greater than the predetermined second threshold. This allows the predetermined thresholds to be tuned based on a typical puff profile, e.g. the puff profile of the user. Alternatively, the predetermined first threshold may be the same as the predetermined second threshold.

The electrical circuitry may be configured to, for each time interval, determine at least one temperature-indicative parameter of the heating element and control the power operation of the heating element based on the at least one determined temperature-indicative parameter. The electrical circuitry may be calibrated such that the temperature-indicative parameter(s) may be compared to a respective setpoint parameter value corresponding to the target temperature of the heating element.

The at least one temperature-indicative parameter may include a temperature of the heating element. For example, the electrical circuitry may comprise a temperature sensor, the temperature sensor being configured to measure the temperature of the heating element. The temperature sensor may be a thermocouple or a thermistor. The setpoint parameter value for the temperature of the heating element may be the target temperature of the heating element.

The at least one temperature-indicative parameter may include a resistance of the heating element. The electrical circuitry may be configured to determine the resistance of the heating element based on a voltage applied across the heating element and a resulting current through the heating element. For example, the electrical circuitry may comprise a sense resistor in series with the heating element, and a current sense amplifier (CSA) in parallel with the sense resistor to measure the current through the heating element. The electrical circuitry may comprise a voltmeter configured to measure the voltage across the heating element. The temperature coefficient of resistance (TCR) of the heating element may be used to calibrate the electrical circuitry such that the resistance of the heating element may be compared to a setpoint resistance value corresponding to the target temperature of the heating element.

The electrical circuitry may be configured to supply a power to the heating element during a measurement period of each time interval for determining the at least one temperature-indicative parameter (e.g. the resistance of the heating element). The measurement period may be not more than 500 µs, e.g. not more than 200 µs, e.g. approximately 100 µs. By restricting the duration of the measurement period, the electrical circuitry can reduce the power supply to the heating element before the temperature of the heating element is allowed to increase significantly. This improves safety and reduces the risk of damage caused by overheating. The measurement period may be not less than 10 µs, e.g. not less than 50 µs. A measurement period of approximately 100 µs is considered to provide a suitable balance between allowing a sufficient amount of time to determine the at least one temperature-indicative parameter while mitigating the risk of overheating.

The at least one temperature-indicative parameter (e.g. the resistance of the heating element) may be determined at the start of each time interval. For example, the measurement period may be an initial period of each time interval.

The power supplied to the heating element during the measurement period of each time interval may correspond to the high power. Therefore, during each high-power interval, the electrical circuitry may be configured to continue supplying the high power at the end of the measurement period, e.g. for the remaining period of the time interval. During each low-power interval, the electrical circuitry may be configured to switch the power supply to the heating element from the high power to the low power at the end of the measurement period, e.g. to supply the low power for the remaining period of the time interval.

The control signal (e.g. PWM signal) may comprise a rising edge at the start of each time interval corresponding to the start of the measurement period. At the end of each measurement period and at the end of each time interval, the control signal (e.g. PWM signal) may comprise a falling edge or may remain at the same amplitude.

Where the electrical circuitry is configured to control the power operation using PWM, the pulse width for each high-power interval may be equivalent to the complete duration of the time interval, and the pulse width for each low-power interval may be equivalent to the duration of the measurement period. Each high-power interval may have a 100% duty cycle. Each low-power interval may have a duty cycle less than 1%, e.g. between 0.25 and 0.75%, e.g. approximately 0.5%. Since the measurement period is relatively short compared to the duration of the time interval, it is considered that substantially only the low power is supplied to the heating element during a low-power interval.

Each time interval may have a duration between 5 and 35 milliseconds, e.g. 10 and 30 milliseconds, e.g. 15 and 25 milliseconds, e.g. approximately 20 milliseconds. Reducing the duration of each time interval improves the responsivity of the power operation to the puff activity, which allows the puff activity to be monitored based on the power operation with greater accuracy. A time interval of approximately 20 milliseconds corresponds to a control frequency of 50 Hz, which is considered to provide a suitable balance between improving accuracy and avoiding an excessive computational demand on the electrical circuitry.

Each consecutive set of time intervals may have a total duration of not more than 500 milliseconds, e.g. not more than 300 milliseconds, e.g. not more than 100 milliseconds. Typically, the duration of a puff lasts for at least 1 second, e.g. around 2-3 seconds. Therefore, the duration of each consecutive set of time intervals can be small enough to resolve the start or end of a typical puff.

Each consecutive set of time intervals may have the same number of time intervals.

Each consecutive set of time intervals may consist of at least 3 time intervals, e.g. at least 4 time intervals, e.g. at least 5 time intervals, e.g. at least 6 time intervals, e.g. at least 7 time intervals, e.g. at least 8 time intervals. Increasing the number of time intervals in each set reduces the sampling noise by taking a larger average.

Each consecutive set of time intervals may consist of not more than 25 time intervals, e.g. not more than 20 time intervals, e.g. not more than 15 time intervals, e.g. not more than 10 time intervals. The number of time intervals in each set may be selected based on the sampling frequency such that the duration of each set is short enough to resolve the start or end of a typical puff. For example, when the sampling frequency is approximately 50 Hz (i.e. the time interval duration is approximately 20 ms), each consecutive set of time intervals may consist of 6 time intervals such that the duration of each consecutive set of time intervals is approximately 120 ms.

The second consecutive set of time intervals may start at least 2 time intervals, e.g. at least 3 time intervals, e.g. at least 4 time intervals, after the first consecutive set of time intervals. Increasing the time difference between the start of each consecutive set of time intervals causes a greater delay between the start or end of a puff and the determination of the start or end of the puff. However, this delay may be systematic if the same time difference is used repeatedly. Therefore, the duration between the start and end of a puff as determined using the present invention is accurate because the delays at the start and the end of the puff, respectively, cancel each other.

In some examples, each consecutive set of time intervals may share overlapping time intervals. For example, the first and second consecutive sets of time intervals may share at least 2 overlapping time intervals, e.g. at least 3 overlapping time intervals, e.g. at least 4 overlapping time intervals, e.g. at least 5 overlapping time intervals, e.g. at least 6 overlapping time intervals. A ratio of the number of overlapping time intervals to the total number of time intervals in each consecutive set of time intervals may be not more than 3:4, e.g. not more than 1:2, e.g. not more than 1:4.

In other examples, the second consecutive set of time intervals may start at the end of the first consecutive set of time intervals.

In some examples, the electrical circuitry may be configured to determine that the puff has started if the first value is smaller than the second value. For example, where the first and second values are indicative of respective amounts of high-power operation, the first value (e.g. the first number of high-power intervals) will be less than the second value (e.g. the second number of high-power intervals) due to an increased power demand immediately after the start of a puff.

In other examples, the electrical circuitry may be configured to determine that the puff has started if the first value is greater than the second value. For example, where the first and second values are indicative of respective amounts of low-power operation, the first value (e.g. the first number of low-power intervals) will be greater than the second value (e.g. the second number of low-power intervals) due to an increased power demand immediately after the start of a puff.

In some examples, the electrical circuitry may be configured to determine that the puff has ended if the first value is greater than the second value. For example, where the first and second values are indicative of respective amounts of high-power operation, the first value (e.g. the first number of high-power intervals) will be greater than the second value (e.g. the second number of high-power intervals) due to a reduced power demand immediately after the end of a puff.

In other examples, the electrical circuitry may be configured to determine that the puff has ended if the first value is smaller than the second value. For example, where the first and second values are indicative of respective amounts of low-power operation, the first value (e.g. the first number of low-power intervals) will be less than the second value (e.g. the second number of low-power intervals) due to a reduced power demand immediately after the end of a puff.

A puff session may refer to a period of continuous use of the aerosol-generating system. During a puff session, the electrical circuitry may control the heating element while monitoring the puff activity of the user. The electrical circuitry may be configured to calculate puff activity data of a puff session based on each determination that a puff has either started or ended during the puff session. Alternatively, or additionally, the electrical circuitry may be configured to calculate the puff activity data based on each determination that the puff has started and/or each determination that the puff has ended.

The puff activity data may include one or more of the following, in any combination: a total number of puffs; a puff duration for each puff; a total puff duration during the puff session; and/or an average puff duration during the puff session.

The electrical circuitry may be configured to adjust the duration of the puff session based on the calculated puff activity data. The electrical circuitry may be configured to extend the duration of the puff session based on the calculated puff activity data. The electrical circuitry may be configured to shorten the duration of the puff session based on the calculated puff activity data.

The electrical circuitry may be configured to control a user feedback element of the aerosol-generating system to indicate that the puff has either started or ended, in response to determining that the puff has either started or ended. The user feedback element may provide a first type of feedback at the start of a puff and a second type of feedback different to the first type of feedback at the end of the puff.

The electrical circuitry may be configured to control the user feedback element of the aerosol-generating system to indicate when the duration of the puff session is being extend and/or shortened.

The electrical circuitry may be configured to control the user feedback element of the aerosol-generating system to indicate the total number of puffs to the user.

The feedback provided to the user can be in any form of sensory feedback, e.g. visual feedback, auditory feedback, and/or haptic feedback. For example, the electrical circuitry may be connected to an LED indicator or display on the aerosol-generating device configured to provide visual feedback to the user.

The electrical circuitry may include to one or more electrical components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the aerosol-generating system, or distributed between the device and/or on one or more external devices in communication with the device, e.g. as part of the system.

The electrical circuitry may include a controller which may refer to one or more units for processing data, examples of which may include an ASIC, microcontroller, FPGA, microprocessor, digital signal processor (DSP) capability, state machine or other suitable component. The controller may be configured to execute a computer program, e.g. which may take the form of machine-readable instructions, which may be stored on a non-transitory memory and/or programmable logic. The controller may have various arrangements corresponding to those discussed for the circuitry, e.g. on-board and/or off board the device as part of the system. As used herein, any machine executable instructions, or computer readable media, may be configured to cause a disclosed method to be carried out, e.g. by the aerosol-generating system as disclosed herein, and may therefore be used synonymously with the term method.

In a second aspect, the present disclosure provides an aerosol-generating device comprising the electrical circuitry of the first aspect.

In a third aspect, the present disclosure provides an aerosol-generating system which comprises the aerosol-generating device of the second aspect and an aerosol-forming material. Examples of the aerosol-generating system include an electronic vapour product (EVP) or a heat-not-burn (HNB) device as described in the background section. The aerosol-generating system is configured to generate an aerosol from the aerosol-forming material which may be contained in and/or provided by an article.

The term "aerosol-forming material" may refer to a substrate or formulation capable of releasing volatile components that can form an aerosol, e.g. by releasing volatile compounds in the aerosol-forming material. An "aerosol" is a dispersion of solid particles and/or liquid droplets dispersed in a gas. The aerosol may be visible or invisible. The aerosol-forming material may be referred to as "e-liquid". Typically, the aerosol-forming material includes a base liquid and optionally nicotine and/or flavourings such that the resulting aerosol contains nicotine and/or flavourings.

The aerosol-forming material may comprise solid (non-liquid) material, such plant material.

The plant material may comprise or be formed of tobacco.

The aerosol-generating system may be a two-part construction comprising a body of the device and the article (alternatively referred to as a "pod" or "cartomizer") configured to be releasably connected/disconnected by an end user. The device body and article are each configured to house respective components of the aerosol-generating system.

In some examples, the article may be configured to be disposed of upon depletion of aerosol-forming material from the storage portion, in which case the article may referred to as a "consumable". Alternatively, the article may be configured for reuse, such that it is configured to be refillable upon depletion of the aerosol-forming material from the storage portion.

In some examples, the article includes the heating element, e.g. the heating element is arranged in or on the article. In this case, the device body may be configured to supply power to the article. The heating element may be configured to aerosolize a liquid or solid aerosol-forming material stored or contained with the article. The article may be pod and the device body may be an EVP device.

In other examples, the device may include the heating element, e.g. the heating element is arranged in or on the device body. In this case, the article may be attached to the device body, e.g. to the heating element for the generation of the aerosol. The heating element may be configured to aerosolize a solid aerosol-forming material stored or contained with the article. The article may be a stick and the device body may be an HNB device.

The heating element may be configured to penetrate the article (e.g. in case of an HNB device). Alternatively, the heating element may be configured to generate an aerosol from a liquid aerosol-forming material held in a storage portion of the aerosol-generating system (e.g. a tank of the aerosol-generating system).

The aerosol-generating system and/or the aerosol-generating device may comprise the power source for powering the heating element. The power source may include one or more (re-chargeable) batteries configured to supply electrical energy to operate the heating element (e.g. and other components of the aerosol-generating device, such as the electrical circuitry). The aerosol-generating system may be powered, alternatively or in addition to the power source, by an external power source. The electrical circuitry may control the supply of electrical power from the power source to the heating element. Thus, the electrical circuitry may be connected between the power source and heating element.

The aerosol-generating system and/or the aerosol-generating device may comprise the user feedback element described above.

In a fourth aspect, the present disclosure provides a method of monitoring puff activity of an aerosol-generating system comprising a heating element for generating an aerosol from an aerosol-forming material, wherein the method includes: controlling a power operation of the heating element at regular time intervals for maintaining a target temperature by switching a power supply from the power source to the heating element between a high power and a low power, calculating a first value indicative of the power operation over a first consecutive set of the time intervals, and a second value indicative of the power operation over a second consecutive set of the time intervals starting after the first consecutive set; and determining that: a puff has started if a difference between the second value and the first value is greater than a predetermined first threshold, and/or a puff has ended if a difference between the first value and the second value is greater than a predetermined second threshold.

In a fifth aspect, the present disclosure provides a computer program comprising instructions which, when the program is executed by a computer, cause the computer to carry out the steps of the method of the fourth aspect.

In a sixth aspect, the present disclosure provides a computer-readable storage medium comprising instructions which, when executed by a computer, cause the computer to carry out the steps of the method of the fourth aspect.

The preceding summary is provided for purposes of summarizing some examples to provide a basic understanding of aspects of the subject matter described herein. Accordingly, the above-described features should not be construed to narrow the scope of the subject matter described herein in any way. Moreover, the above and/or following examples may be combined in any suitable combination to provide further examples, except where such a combination is clearly impermissible or expressly avoided. Other features, aspects, and advantages of the subject matter described herein will become apparent from the following text and the accompanying figures.

### BRIEF DESCRIPTION OF THE FIGURES

Aspects, features and advantages of the present disclosure will become apparent from the following description of examples in reference to the appended figures in which like numerals denote like elements.
**Figure 1** shows an example of an aerosol-generating system;
**Figure 2** shows internal components of the aerosol-generating system of Figure 1;
**Figure 3** shows a further example of the aerosol-generating system;
**Figure 4** shows the components of the aerosol-generating system of Figure 3 in a 'disengaged state';
**Figure 5** shows the components of the aerosol-generating system of Figure 3 in an 'engaged state';
**Figure 6** shows an exemplary control signal having a control frequency of 50 Hz;
**Figure 7** shows an exemplary control signal during the start of a session over 1 second;
**Figure 8** shows an exemplary control signal in a steady-state period of use over 1 second;
**Figure 9** shows an exemplary control signal during the start of a puff over 1 second;
**Figure 10** shows an exemplary control signal during the end of a puff over 1 second.
**Figure 11** shows a flow chart illustrating a method of monitoring user puff activity of the aerosol-generating system.

### DETAILED DESCRIPTION OF EMBODIMENTS

It is to be understood that the present disclosure, which includes the specification and claim(s), is not limited by specific construction details or process steps. Rather, it will be clear to those skilled in the art that the systems, apparatuses, and methods described herein can be embodied and practiced in various alternative ways without departing from the scope of the invention.

Unless defined otherwise, scientific and technical terms used herein have their meanings commonly understood by those skilled in the art and that known techniques and procedures may be performed according to conventional methods.

In the present disclosure, the terms "a" and "an" may mean "one", "one or more", "at least one", and "one or more than one" unless the context clearly indicates otherwise. Likewise, plural terms shall include the singular unless otherwise required by context.

In the present disclosure, the term "or" means an inclusive "and/or" unless explicitly indicated to refer to alternatives only or unless the alternatives are mutually exclusive.

In the present disclosure, the terms "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless stated otherwise, the features of examples disclosed herein, and of the claims, may be integrated together in any suitable arrangement such that combinations of features are not limited by the described forms, particularly the form (e.g. numbering) of example(s), embodiment(s), or dependency of claim(s). This also applies to the phrase "in one example", "according to an example" and the like, which are merely a stylistic form of wording not to be construed as limiting the features to a separate embodiment. This is to say, a reference to 'an,' 'one,' or 'some' examples(s) may be a reference to any one or more, and/or all examples, or combination(s) thereof, disclosed. Also, similarly, reference to "the" example may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably.

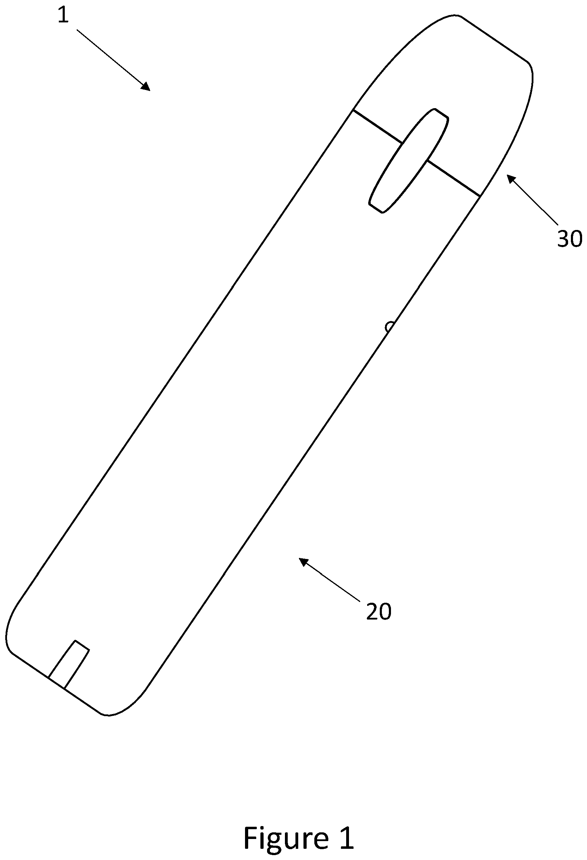

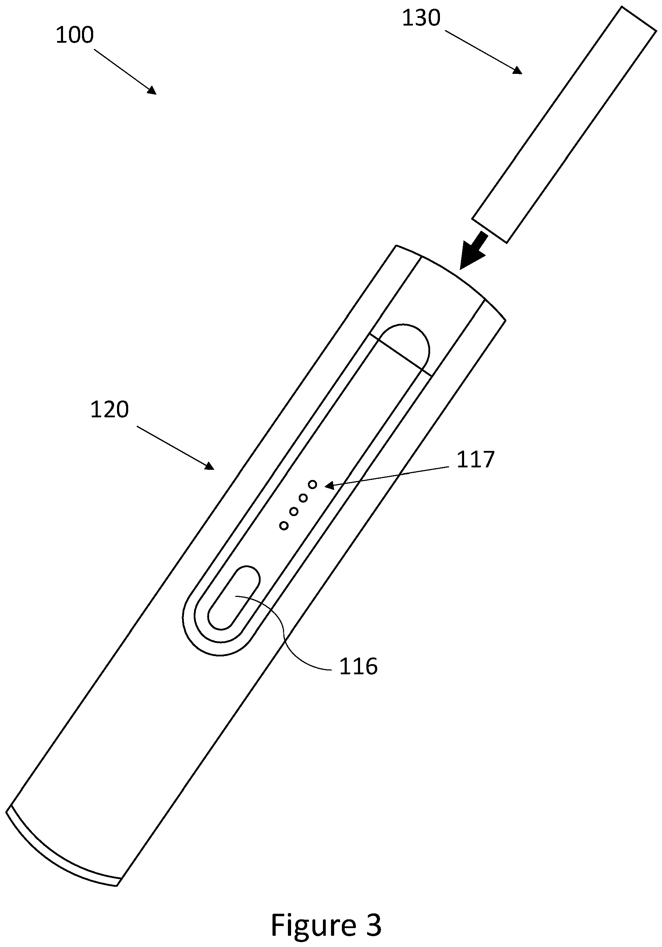

Figure 1 shows an example of an aerosol-generating system 1. In this example, the aerosol-generating system 1 is an electronic vapour product (EVP) configured to produce an aerosol from an aerosol-forming material 10 (e.g. a liquid or gel precursor), although it will be appreciated that the aerosol-generating system 1 may be similarly applicable to a heat-not-burn product (HNB) configured to produce an aerosol from heating an aerosol-forming material (e.g. a solid precursor such as tobacco) to a temperature below its combustion temperature (see Figures 3 to 5).

The term "aerosol-forming material" refers to a substrate or formulation capable of releasing volatile components that can form an aerosol, e.g. by releasing volatile compounds in the aerosol-forming material. An "aerosol" is a dispersion of solid particles and/or liquid droplets dispersed in a gas. The aerosol may be visible or invisible.

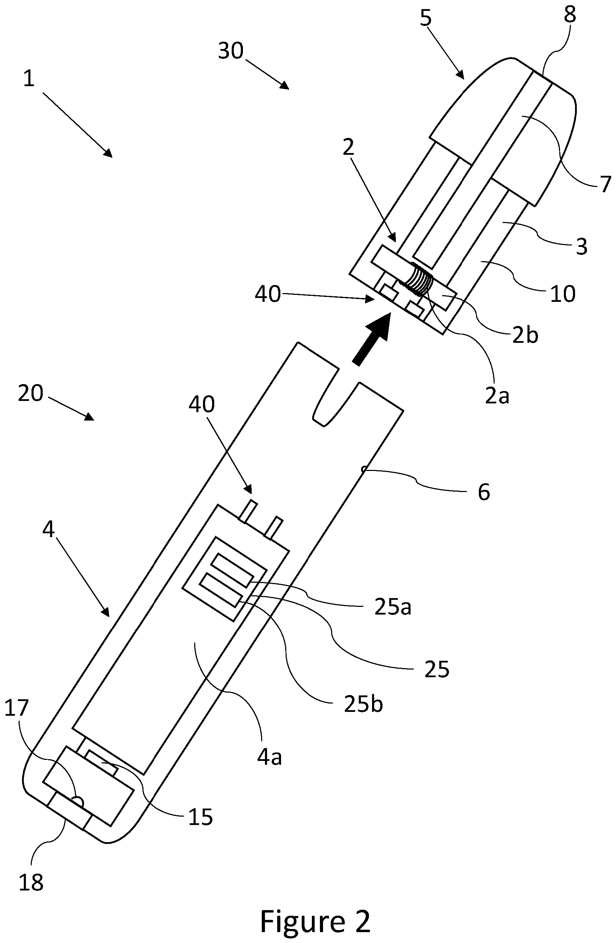

Figure 2 shows a schematic representation of the internal components of the aerosol-generating system 1. The aerosol-generating system 1 comprises an aerosol-generating unit 2 configured to generate an aerosol from an aerosol-forming material 10 held in a storage portion 3 of the aerosol-generating system 1 (implemented here as a "tank"). The aerosol-generating unit 2 is a heating system including a heating element 2a.

The aerosol-forming material 10 may be referred to as "e-liquid". Typically, the aerosol-forming material 10 includes a base liquid and optionally nicotine and/or flavourings such that the resulting aerosol contains nicotine and/or flavourings.

The aerosol-generating system 1 includes a power source 4. In this example, the power source 4 includes a battery 4a configured to supply electrical energy to operate the aerosol-generating unit 2 and other components. The aerosol-generating system 1 may be powered, alternatively or in addition to the battery 4a, by an external power source.

The aerosol-generating system 1 includes an aerosol-delivery system 5 for delivery of the aerosol to a user. In this example, the aerosol-delivery system 5 comprises an air inlet 6, a mouthpiece 8, and an air passageway 7 extending therebetween via a region in proximity to the aerosol-generating unit 2.

The aerosol-generating unit 2 includes a wick 2b having at least one end that extends into the storage portion 3 and is configured to draw the aerosol-forming material 10 out from the storage portion 3. In this example, the heating element 2a is in the form of a heating filament wrapped around a portion of the wick 2b. In this manner, the heating element 2a can heat up the aerosol-forming material 10 drawn out of the storage portion 3 by the wick 2b to produce the aerosol, which is then drawn through the air passageway 7 to the mouthpiece 8. In other examples, the heating element 2a may be a mesh heater, ceramic heater, or other means of generating heat. The heating element 2a may be part of an induction heater having a susceptor configured to produce heat when penetrated by an alternating magnetic field.

The aerosol-generating system 1 may be a two-part construction comprising a device body 20 and an article 30 (alternatively referred to as a "pod" or "cartomizer") configured to be releasably connected/disconnected by an end user. The device body 20 and article 30 are each configured to house respective components of the aerosol-generating system 1.

In some examples, the article 30 may be configured to be disposed of upon depletion of aerosol-forming material 10 from the storage portion, in which case the article 30 may referred to as a "consumable". Alternatively, the article 30 may be configured for reuse, such that it is configured to be refillable upon depletion of the aerosol-forming material 10 from the storage portion.

In this example, the device body 20 comprises the power source 4, and the article 30 comprises the aerosol-generating unit 2 and storage portion 3, although it will be appreciated that the device body 20 and article 30 may house any respective set of components. The device body 20 and article 30 are configured to physically interlock to secure the article 30 relative to the device body 20.

Upon connection, electrical connectors 40 of the device body 20 and article 30 may establish an electrical connection between the device body 20 and the article 30. In this way, electrical power can be supplied from the power source 4 to the aerosol-generating unit 2 (or other components of the article 30) without the article 30 needing to have its own power supply.

The device body 20 may include any one or more of electrical circuitry 25, a memory, a wireless interface, and one or more other components. The electrical circuitry 25 includes a control circuit 25a and a controller 25b. The device body 20 may include a printed circuit board (PCB) on which components of the electrical circuitry 25, such as the control circuit 25a and the controller 25b, the memory, wireless interface, and other components may be mounted.

The electrical circuitry 25 may include one or more processing resources for controlling one or more operations of the body 20 and article 30, e.g. based on instructions stored in the memory. The wireless interface may be configured to communicate wirelessly with an external (e.g. mobile) device, e.g. via Bluetooth. The other component(s) may include one or more user interface devices configured to convey information to a user, a pressure sensor 15, and/or a charging port 18 (see Figure 2).

The aerosol-generating system 1 may comprise one or more input and/or output elements. The input and/or output elements may form part of a user interface (UI) of the aerosol-generating system 1. For instance, Figure 2 shows an output element in the form of a light (e.g. an LED) 17. The light 17 is configured to convey information to the user regarding the state of the system 1. It will be appreciated that the input element(s) may be provided in various forms, such as touch screens, switches, and sensors, and the output element(s) may be provided in various forms, such as display screens, speakers, or a haptic output generated by a vibration generator.

Figure 3 shows an example of an aerosol-generating system 100 comprising a device body 120 and an article 130 (alternatively referred to as a "consumable") for insertion into the device body 120. In this example, the device body 120 is a heat-not-burn device (HNB) configured to produce an aerosol by heating an aerosol-forming material 110 (e.g. a solid precursor, such as tobacco material) to a temperature below its combustion temperature, although it will be appreciated that the invention may be similarly applicable to an electronic vapour product (EVP) configured to produce an aerosol from an aerosol-forming material (e.g. a liquid or gel precursor).

The term "aerosol-forming material" refers to a material capable of releasing volatile components that can form an aerosol, e.g. by releasing volatile compounds in the aerosol-forming material 110. An "aerosol" is a dispersion of solid particles and/or liquid droplets dispersed in a gas. The aerosol may be visible or invisible.

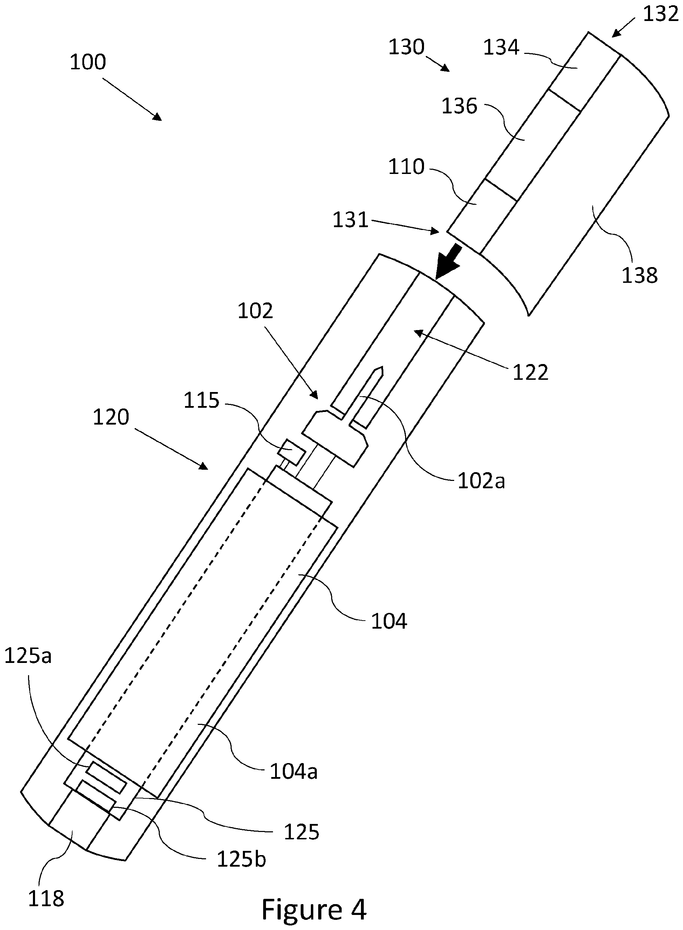

Figure 4 shows a schematic representation of the internal components of the device body 120 and article 130. The device body 120 and article 130 are shown in a "disengaged state" in which the article 130 is separated from the device body 120.

The aerosol-generating system 100 has an aerosol-generating unit 102 in the form of a heating system. The heating system comprises a heating element 102a configured to penetrate the article 130. The heating element 102a heats the aerosol-forming material 110 to a temperature lower than its combustion temperature such that an aerosol can be formed by evaporation, torrefaction and pyrolysis.

The aerosol-generating system 100 includes the power source 104. In this example, the power source 104 includes a battery 104a configured to supply electrical energy to operate the aerosol-generating unit 102 and other components. The aerosol-generating system 100 may be powered, alternatively or in addition to the battery 104a, by an external power source.

The article 130 defines an air passageway which transmits aerosol generated from the aerosol-forming material 110 to a downstream end 132 (i.e. terminal end or mouth end) of the article 130. The article 130 may comprise one or more filter elements 134, one or more spacer elements 136, and one or more wrapping layers 138 (e.g. paper, foil or composite layers). One or more of the filter elements 134 and spacer elements 136 may define the air passageway. In the present example, the aerosol-forming material 110 is disposed at the upstream end 131 of the article 130, which further comprises a filter element 134 at the downstream end 132 and a spacer element 136 positioned between them, all circumscribed by a wrapping layer 138.

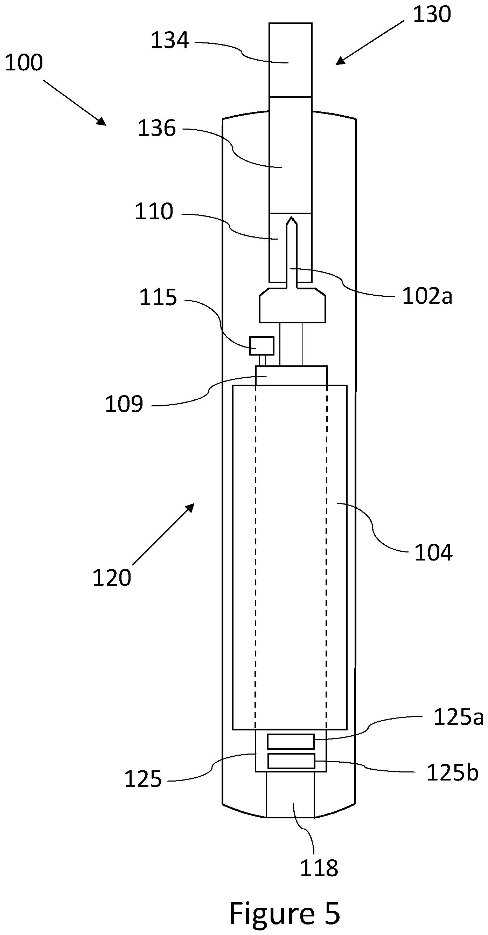

Figure 5 shows the aerosol-generating system 100 in an "engaged state" in which the article 130 is inserted into an internal chamber 122 of the device body 120.

In this example, the heating element 102a is configured to penetrate the article 130. The heating element 102a is arranged to extend along a length of the aerosol-forming material 110 when inserted therein, such that when the heating element 102a is activated, heat is transferred radially outward from the heating element 102a to the aerosol-forming material 110 resulting in formation of an aerosol. This may be referred to as an 'inside-out' heating arrangement. The aerosol is subsequently entrained in an airflow produced by the action of the user drawing on the downstream end 132 of the article 130.

In alternative examples, the heating element 102a may be configured to at least partially encircle the article 130, such that when the heating element 102a is activated, heat is transferred radially inward from the heating element 102a to the aerosol-forming material 110. This may be referred to as an 'outside-in' heating arrangement.

In this example, the heating element 102a is a resistive heating element although it will be appreciated that the aerosol-forming material 110 may be heated by any suitable means. For instance, the heating element 102a may comprise a susceptor (not shown) configured to produce heat when penetrated by an alternating magnetic field.

The device body 120 may include any one or more of electrical circuitry 125, a memory, a wireless interface, and one or more other components. The electrical circuitry 125 includes a control circuit 125a and a controller 125b. The device body 120 may include a printed circuit board (PCB) on which components of the electrical circuitry 125, memory, wireless interface, and other components may be mounted.

The electrical circuitry 125 may include a processing resource for controlling one or more operations of the body 120 and article 130, e.g. based on instructions stored in the memory. The controller 125b is an example of the processing resource. The wireless interface may be configured to communicate wirelessly with an external (e.g. mobile) device, e.g. via Bluetooth. The other component(s) may include one or more user interface devices configured to convey information to a user, a pressure sensor 115, and/or a charging port 118.

The aerosol-generating system 100 may comprise one or more input and/or output elements. The input and/or output elements may form part of a user interface (UI) of the system 100. For instance, Figure 3 shows an input element in the form of a button 116 and an output element in the form of a set of lights (LEDs) 117. The button 116 is configured to control at least one function of system 100, such as power supply to the heating element 102a. The lights 117 are configured to convey information to the user regarding the state of the system 100 and/or article. It will be appreciated that the input element(s) may be provided in various forms such as touch screens, switches, and sensors, and the output element(s) may be provided in various forms such as display screens, speakers, or a haptic output generated by a vibration generator.

In the examples of the aerosol-generating system 1, 100 described herein, the power supply from the power source 4, 104 to the heating element 2a, 102a is thermostatically controlled by the controller 25b, 125b of the electrical circuity 25, 125 using a control signal.

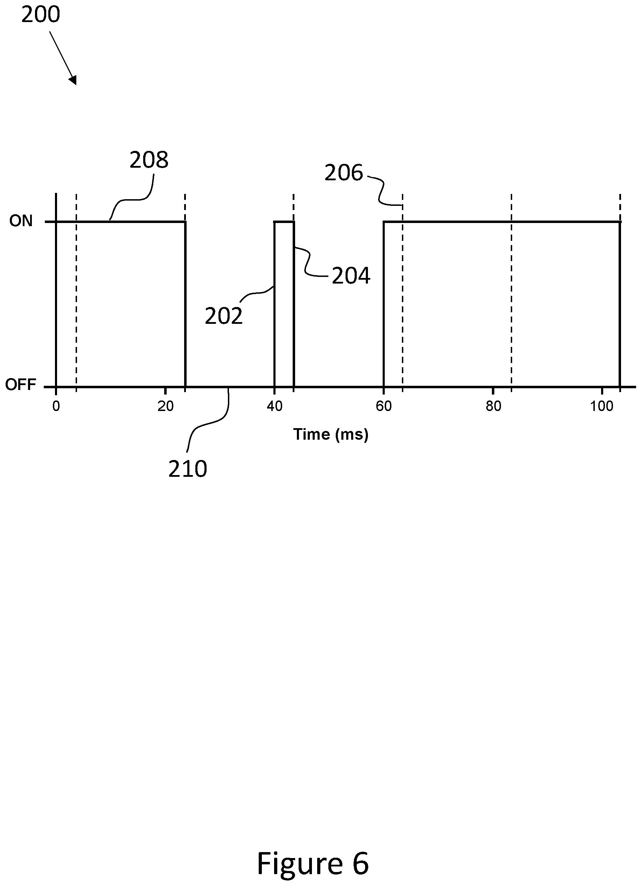

Figure 6 shows an exemplary control signal 200 over a period of 100 ms. The control signal 200 corresponds to a PWM signal which varies between a high power and a lower power (e.g. between a non-zero voltage and a zero-voltage). Hence, the power operation of the heating element 2a, 102a is controlled to switch the heating element 2a, 102a ON and OFF. The control signal 200 has a control frequency of 50 Hz, which means that every 20 milliseconds the controller 25b, 125b determines whether the heater element 2a, 102a should be ON or OFF. The rising edges 202 and falling edges 204 trigger the electrical circuitry 25, 125 to increase and decrease the power supply to the heating element 2a, 102a, respectively.

As shown in Figure 6, the control signal 200 is always ON for an initial period of every 20 milliseconds time interval. This initial period corresponds to a measurement period 206 of approximately 100 µs in which the resistance of the heating element 2a, 102a is measured and compared to a setpoint resistance value to determine whether or not the temperature of the heating element 2a, 102a is higher or lower than a target temperature. The heating element 2a, 102a is switched OFF when its actual temperature is higher than its target temperature and is allowed to remain ON when its actual temperature is higher than its target temperature. The dashed vertical lines in Figure 6 indicate the endpoint of each measurement period 206 schematically (not to scale). At each endpoint, the control signal 200 either drops to a zero voltage to switch OFF the heating element 2a, 102a, or it stays at the non-zero voltage such that the heating element 2a, 102a remains ON.

Time intervals in which the heating element 2a, 102a remains ON are referred to as a high-power intervals 208 and time intervals in which the heating element 2a, 102a switches OFF are referred to as a low-power intervals 210. Since the heating element 2a, 102a is always on during the measurement period 206, a finite amount of power is always supplied to the heating element 2a, 102a during every time interval.

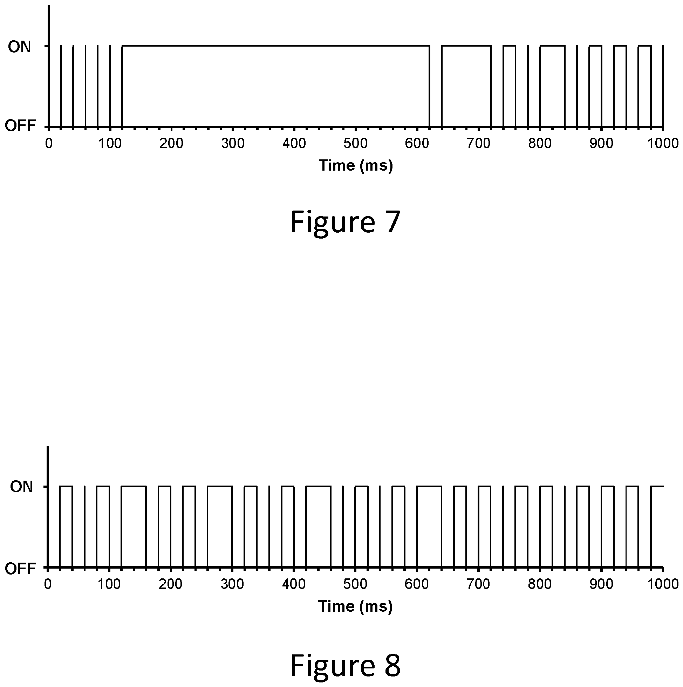

Figure 7 shows an exemplary control signal 200 over a period of 1 second at the start of a puff session. After a series of consecutive low-power intervals 210, the control signal 200 remains ON for a prolonged period consisting of 25 high-power intervals 208. This is because the temperature of the heater element 2a, 102a starts relatively low (e.g. ambient temperature) and is required to reach the target temperature for heating the aerosol-forming material 10, 110. When the heating element 2a, 102a reaches the target temperature, the control signal 200 varies ON and OFF to maintain the temperature of the heating element 2a, 102a.

Figure 8 shows an exemplary control signal 200 over 1 second in a steady-state period of use. The steady-state period of use refers to a period after the heating element 2a, 102a has been allowed to reach the target temperature and its power operation is thermostatically controlled to respond to minor fluctuations caused by environmental changes. As such, the control signal 200 switches regularly between high-power intervals 208 and low-power intervals 210. Over an extended steady-state period of time, the number of high-power intervals 208 is approximately the same as the number of low-power intervals 210.

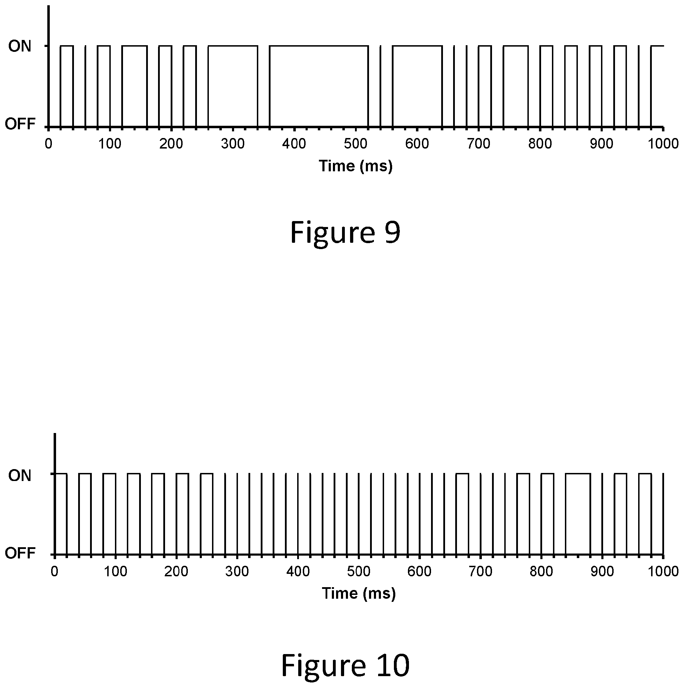

Figure 9 shows an exemplary control signal 200 over a period of 1 second during the start of a puff. Before the start of the puff, the heating element 2a, 102a is maintained at the target temperature in a steady-state period of use. After about 300 milliseconds, the user starts inhaling aerosol from the system 100 which causes the temperature of the heating element 2a, 102a to drop suddenly. Due to the change in temperature, the resistance of the heating element 2a, 102a also decreases. Therefore, during the measurement period 206 immediately after the start of the puff, the resistance of the heating element 2a, 102a is determined and found to be lower than the setpoint resistance value corresponding to the target temperature. In order to maintain the temperature of the heating element 2a, 102a at the target temperature, the power operation of the heating element 2a, 102a is thermostatically controlled to supply the high power to the heating element 2a, 102a for a series of consecutive time intervals until the target temperature is reached again. Accordingly, the heating element 2a, 102a stays ON for a number of high-power intervals 208 during the start of the puff.

During the puff, when the heating element 2a, 102a reaches the target temperature, the heating element 2a, 102a is switched OFF and ON more regularly. This occurs at around 700 milliseconds in the control signal 200 shown in Figure 9.

Figure 10 shows an exemplary control signal 200 over a period of 1 second during the end of a puff. Before the end of the puff, the heating element 2a, 102a is maintained at the target temperature. After about 300 milliseconds, the user stops inhaling aerosol from the system 1, 100 which causes the temperature of the heating element 2a, 102a to increase suddenly while the heating element 2a, 102a is ON. Due to the change in temperature, the resistance of the heating element 2a, 102a also increases. Therefore, during the measurement period 206 immediately after the end of the puff, the resistance of the heating element 2a, 102a is determined and found to be higher than the setpoint resistance value corresponding to the target temperature. In order to maintain the temperature of the heating element 2a, 102a at the target temperature, the power operation of the heating element 2a, 102a is thermostatically controlled to supply the low power to the heating element 2a, 102a for a series of consecutive time intervals until the target temperature is reached again. Accordingly, the heating element 2a, 102a is switched OFF repeatedly for a number of low-power intervals 210 during the end of the puff.

After the puff, when the heating element 2a, 102a reaches the target temperature, the heating element 2a, 102a is switched ON and OFF more regularly. This corresponds to another steady-state period which occurs at around 700 milliseconds in the control signal 200 shown in Figure 10.

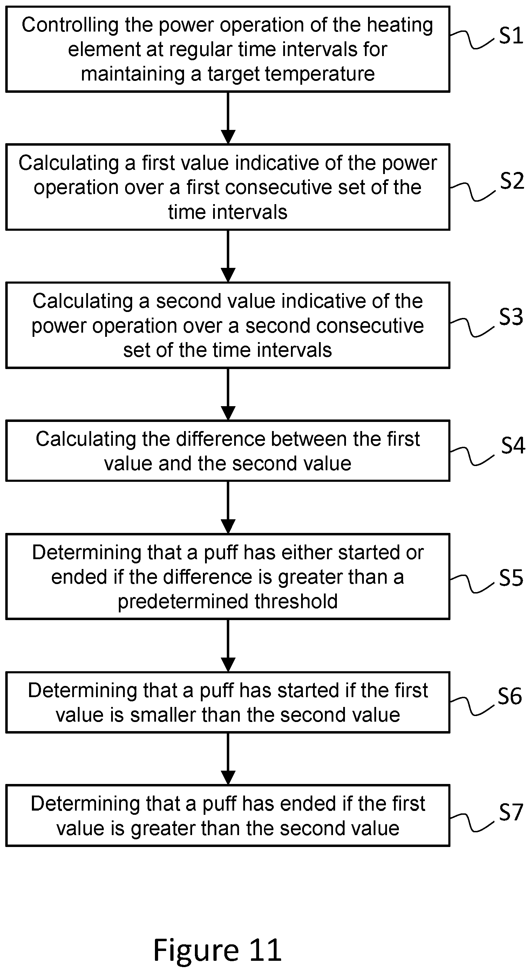

A method of monitoring puff activity during use of the aerosol-generating system 1, 100 will now be described. Figure 11 shows a flow chart illustrating the method.

In a first step S1, the power operation of the heating element 2a, 102a is thermostatically controlled at regular intervals as described above. This involves switching a power supply from the power source 104 to the heating element 2a, 102a between a high power and a low power using the control signal 200 for maintaining a target temperature. As described above, the high power and low power corresponds to the heating element 2a, 102a being ON or OFF during each time interval. Each time interval is either a high-power interval 208 when the heating element 2a, 102a remains ON after the measurement period 206, or a low-power interval 210 when the heating element 2a, 102a is switched OFF after the measurement period 206.

Next, in step S2, a first value indicative of the power operation over a first consecutive set of time intervals is calculated. In this example, the first value is the number of high-power intervals 208 in the first consecutive set of time intervals, which is indicative of an amount of high-power operation. In this example, the first consecutive set of time intervals consists of 10 time intervals having a total duration of 200 milliseconds. In other examples, the number of time intervals in the first set may be higher resulting in a longer total duration, or lower resulting in a shorter total duration.

Similarly, in step S3, a second value indicative of the power operation over a second consecutive set of time intervals is calculated. The second value is the number of high-power intervals 208 in the second consecutive set of time intervals. The second consecutive set of time intervals has the same number of time intervals as the first consecutive set, consisting of 10 time intervals having a total duration of 200 milliseconds. The second consecutive set of time intervals starts after the first consecutive set of time intervals. The second consecutive set of time intervals may start at the end of the first consecutive set of time intervals or the first and second consecutive sets may overlap. For example, the second consecutive set may start during the sixth consecutive time interval of the first set, i.e. overlapping with the last 5 time intervals of the first set. In other words, the second set may start 100 milliseconds after the first set.

Since the first and second values corresponds to the number of high-power intervals 208 in the respective consecutive sets of time intervals, the first and second values are able to be compared to determine whether there has been a significant change in the amount of high-power operation.

Therefore, in step S4, the controller 25b, 125b calculates the difference between the first and second values, i.e. the difference between the number of high-power intervals 208 in each set.

In step S5, the controller 25b, 125b determines that a puff has either started or ended if the difference between the first value and the second value is greater than a predetermined threshold. In this example, the predetermined threshold is set at 3 high-power intervals 208, although the threshold may be set higher or lower to optimise the accuracy and reliability of the determination based on other parameters such as the number of time intervals in each set and the number of overlapping time intervals. Step S5 may further include determining that the puff has started if the difference between the second value and the first value is greater than a predetermined first threshold and/or determining that the puff has ended if the difference between the first value and the second value is greater than a predetermined second threshold.

The method may optionally include step S6 and/or step S7 discussed below.

In step S6, the controller 25b, 125b determines that a puff has started if the first value is smaller than the second value. Turning again to Figure 9, the amount of high-power operation increases at the start of a puff to prevent a significant drop in the temperature of the heating element 2a, 102a. Therefore, the second value indicative of the amount of high-power operation during the second consecutive set of time intervals starting after the first consecutive set of time intervals is higher than the first value indicative of the amount of high-power operation during the first consecutive set of time intervals. That is, the number of high-power intervals increases over time.

In step S7, the controller 25b, 125b determines that a puff has ended if the first value is greater than the second value. Turning again to Figure 10, the amount of high-power operation decreases at the start of a puff to prevent the heating element 2a, 102a overheating when the user stops inhaling aerosol from the system 1, 100. Therefore, the second value indicative of the amount of high-power operation during the second consecutive set of time intervals starting after the first consecutive set of time intervals is lower than the first value indicative of the amount of high-power operation during the first consecutive set of time intervals. That is, the number of high-power intervals decreases over time.

Following the method of Figure 11, the controller 25b, 125b may perform further calculations to derive puff activity data during a puff session. The controller 25b, 125b may then adjust the operation of the system 1, 100 based on the puff activity data to provide a bespoke user experience. For example, the duration of the puff session may be extended if a total number of puffs and/or a total duration of puffs during the puff session is low. Similarly, the duration of the puff session may be shortened if a total number of puffs and/or a total duration of puffs during the puff session is high. The total number of puffs and/or the total duration of puffs may be calculated based on the determination of consecutive occurrences of a puff either starting or ending. It would not be possible to calculate the total number of puffs and/or the total duration of puffs if only the start of each puff could be determined.

## Claims

1. An electrical circuitry for determining a puff of an aerosol-generating system, the system comprising a heating element for generating an aerosol from an aerosol-forming material, the electrical circuitry being connectable to the heating element and a power source for powering the heating element, wherein the electrical circuitry is configured to:
control a power operation of the heating element at regular time intervals for maintaining a target temperature by switching a power supply from the power source to the heating element between a high power and a low power such that each interval is either:
a high-power interval in which mostly high power is supplied to the heating element, or
a low-power interval in which mostly low power is supplied to the heating element;
calculate a first value indicative of the power operation over a first consecutive set of the time intervals, and a second value indicative of the power operation over a second consecutive set of the time intervals starting after the first consecutive set; and
determine that:
a puff has started if a difference between the second value and the first value is greater than a predetermined first threshold, and/or
a puff has ended if a difference between the first value and the second value is greater than a predetermined second threshold.

2. The electrical circuitry according to any preceding claim, wherein each value indicative of the power operation over the respective consecutive set of time intervals is a total number of high-power intervals during the respective consecutive set of time intervals.

3. The electrical circuitry according to claim 2, wherein the predetermined first threshold and/or the predetermined second threshold is at least 5 high-power intervals.

4. The electrical circuitry according to any preceding claim, wherein the predetermined first threshold is different to the predetermined second threshold.

5. The electrical circuitry according to any preceding claim, further configured to, for each time interval, determine at least one temperature-indicative parameter of the heating element and control the power operation of the heating element based on the at least one temperature-indicative parameter.

6. The electrical circuitry according to claim 5, wherein the electrical circuitry is configured to supply a power to the heating element during a measurement period of each time interval for determining the at least one temperature-indicative parameter.

7. The electrical circuitry according to claim 5, wherein the measurement period is not more than 500 µs.

8. The electrical circuitry according to any preceding claim, wherein each regular time interval has a duration between 5 and 35 milliseconds.

9. The electrical circuitry according to any preceding claim, wherein each consecutive set of time intervals has a total duration of not more than 500 milliseconds.

10. The electrical circuitry according to any preceding claim, wherein the second consecutive set of time intervals starts at least 3 time intervals after the first consecutive set of time intervals.

11. The electrical circuitry according to any preceding claim, further configured to calculate puff activity data of a puff session based on each determination that a puff has started and/or ended during the puff session and adjust the duration of the puff session based on the calculated puff activity data.

12. The electrical circuitry according to claim 11, wherein the puff activity data includes one or more of the following, in any combination: a total number of puffs; a puff duration for each puff; a total puff duration during the puff session; and/or an average puff duration during the puff session.

13. An aerosol-generating device comprising the electrical circuitry according to any preceding claim.

14. The aerosol-generating device according to claim 13, wherein the aerosol-generating device is a heat-not-burn (HNB) device.

15. A method of determining a puff of an aerosol-generating system comprising a heating element for generating an aerosol from an aerosol-forming material, wherein the method includes:
controlling a power operation of the heating element at regular time intervals for maintaining a target temperature by switching a power supply from the power source to the heating element between a high power and a low power such that each interval is either:
a high-power interval in which mostly high power is supplied to the heating element, or
a low-power interval in which mostly low power is supplied to the heating element;
calculating a first value indicative of the power operation over a first consecutive set of the time intervals, and a second value indicative of the power operation over a second consecutive set of the time intervals starting after the first consecutive set; and
determining that:
a puff has started if a difference between the second value and the first value is greater than a predetermined first threshold, and/or
a puff has ended if a difference between the first value and the second value is greater than a predetermined second threshold.
